# EUROPÄISCHE PATENTSCHRIFT

(11) **EP 2 110 113 B1**
(45) Veröffentlichungstag und Bekanntmachung des Hinweises auf die Patenterteilung: **11.04.2012**
(21) Anmeldenummer: 08014349.8
(22) Anmeldetag: 12.08.2008
(51) Int. Cl.: A61H 33/00, A01K 63/00

(54) **Anordnung zum Behandeln von Hautkrankheiten mittels Kangalfischen**
Assembly for treating skin illnesses with doctor fish
Dispositif de traitement de maladies de peau à l'aide de Garra Rufa

(30) Priorität: 17.04.2008 DE 202008005347 U
(43) Veröffentlichungstag der Anmeldung: 21.10.2009
(73) Patentinhaber: Buck-Heitmann, Petra, 22397 Hamburg (DE)
(72) Erfinder: Buck-Heitmann, Petra, 22397 Hamburg (DE)
(74) Vertreter: Glawe, Delfs, Moll

(56) Entgegenhaltungen:
- EP-A- 1 398 017
- DE-A1- 2 127 234
- DE-A1- 3 642 733
- DE-B3-102004 005 870
- JP-A- 2002 119 557
- GRASSBERGER, MARTIN; HOCH, W.: "Ichthyotherapy as alternative treatment for patients with psoriasis: a pilot study" ECAM, Bd. 3, Nr. 4, 30. Juni 2006 (2006-06-30), Seiten 483-488, XP002518783

## Beschreibung

Die Erfindung betrifft eine Anordnung zur Behandlung von Hautkrankheiten mittels Kangalfischen. Es ist bekannt, dass gute Erfolge bei der Behandlung von Hautkrankheiten erzielt worden sind, wenn der Patient zusammen mit Kangalfischen gebadet hat. Die Kangalfische knabbern an sich lösenden Hautbestandteilen und verstärken dadurch die Selbstheilungskräfte des menschlichen Körpers. Grundsätzlich möglich ist es, das Bad des Patienten zusammen mit den Kangalfischen in der natürlichen Umgebung der Kangalfische stattfinden zu lassen. Eine Reise in die natürlichen Verbreitungsgebiete von Kangalfischen ist jedoch mit einigem Umstand für den Patienten verbunden.

Soll die Behandlung außerhalb der natürlichen Verbreitungsgebiete der Kangalfische vorgenommen werden, so müssen die Kangalfische in künstlichen Einrichtungen gehalten und mit dem Patienten in Kontakt gebracht werden. Es ist jedoch zum einen schwierig, eine solche künstliche Anlage so zu gestalten, dass den Belangen des Tierschutzes Genüge getan wird. Zum anderen besteht in solchen künstlichen Einrichtungen die Gefahr, dass Keime von den Kangalfischen auf die Patienten übertragen werden. Eine Behandlungsvorrichtung zum Behandeln menschlicher Hauterkrankungen mittes Kangalfischen ist aus der DE 10 2004 005 870 B3 bekannt, welche eine Anordnung nach dem Oberbegriff von Anspruch 1 offenbart.

Der Erfindung liegt die Aufgabe zu Grunde, eine Anordnung zum Behandeln von Hautkrankheiten mittels Kangalfischen vorzustellen, bei der das Risiko einer Übertragung von Keimen auf den Patienten vermindert ist. Die Aufgabe wird gelöst durch die Merkmale des Anspruchs 1. Vorteilhafte Ausführungsformen finden sich in den Unteransprüchen.

Erfindungsgemäß umfasst die Anordnung eine Heilbadewanne und eine Reinigungsstation. Es ist eine erste Transporteinrichtung vorgesehen, mit der die Kangalfische aus der Reinigungsstation in die Heilbadewanne befördert werden können. Ferner ist eine zweite Transporteinrichtung vorgesehen, mit der die Kangalfische aus der Heilbadewanne in die Reinigungsstation befördert werden können. Die Transporteinrichtung zum Befördern von Kangalfischen aus der Reinigungsstation in die Heilbadewanne ist ein Verbindungskanal zwischen der Reinigungsstation und der Heilbadewanne. Die Anordnung umfasst ferner ein Mittel zum Erzeugen eines beständigen Wasserstroms mit einer Temperatur zwischen 20°C und 35°C, vorzugsweise zwischen 25°C und 32°C durch die Reinigungsstation.

Der Begriff Heilbadewanne bezeichnet eine Wanne, die so bemessen ist, dass ein Mensch darin zusammen mit Kangalfischen baden kann. In die Heilbadewanne kann Wasser mit einer zum Baden angenehmen Temperatur eingelassen werden. Die von Menschen als angenehm empfundene Badetemperatur liegt zwischen 36°C und 40°C.

Um die Erzeugung eines beständigen Wasserstroms zu ermöglichen, umfasst die Reinigungsstation vorzugsweise einen Zufluss und einen Abfluss. Durch den Zufluss zugeführtes Wasser fließt durch die Reinigungsstation zum Abfluss, so dass ein horizontal durch die Reinigungsstation gerichteter Wasserstrom entsteht. Es kann eine Zuleitung vorgesehen sein, über die dem Zufluss Wasser zugeführt werden kann. In der Zuleitung ist eine Heizung- oder Kühleinrichtung angeordnet, mit der das zu der Reinigungsstation zugeführte Wasser auf eine konstante Temperatur gebracht werden kann. Die konstante Temperatur liegt zwischen 20°C und 35°C, vorzugsweise zwischen 25°C und 32°C. Von einem beständigen Wasserstrom wird gesprochen, wenn der Wasserstrom über einen Zeitraum von beispielsweise 10 Minuten durchgehend aufrechterhalten werden kann und wenn der wasserstrom das gesamte Wasser in der Reinigungsstation in Bewegung hält.

In einer Heilbadewanne bestehen mehrere Wege, auf denen Keime von den Kangalfischen auf den Patienten übertragen werden können. Einerseits ist es möglich, dass sich Keime von der Oberfläche der Kangalfische lösen und auf den Patienten übergehen. Andererseits können Keime in Ausscheidungen von Kangalfische enthalten sein, die durch das Wasser auf den Patienten übertragen werden. Die Keime in Ausscheidungen können ein besonderes Risiko darstellen, da sich die Kangalfische zu wesentlichen Teilen von Hautschuppen der Patienten ernähren. Nehmen die Kangalfische zusammen mit den Hautschuppen Keime eines Patienten auf, so können diese Keime über die Ausscheidungen auf einen nachfolgenden Patienten übertragen werden.

Wenn die Wassertemperatur in der Reinigungsstation um einige Grad, beispielsweise zwischen 1°C und 10°C, vorzugsweise zwischen 2°C und 6°C niedriger ist als die Wassertemperatur in der Heilbadewanne, sind die Kangalfische einer kühleren Umgebung ausgesetzt, wenn sie von der Heilbadewanne in die Reinigungsstation umgesetzt werden. Ein Wechsel von einer wärmeren in eine kühlere Umgebung regt aber den Stoffwechsel der Kangalfische an. Ausscheidungen der Kangalfische finden deswegen vorwiegend in den ersten Minuten statt, nachdem die Kangalfische von der Heilbadewanne in die Reinigungsstation umgesetzt wurden. Zu dem umgekehrten Effekt kommt es, wenn die Kangalfische aus der Reinigungsstation in die Heilbadewanne umgesetzt werden. Für die Kangalfische ist dieser Wechsel gleichbedeutend mit einem Anstieg der Wassertemperatur. Der Stoffwechsel verlangsamt sich und es kommt nicht zu Ausscheidungen. Indem die erfindungsgemäße Anordnung so gestaltet ist, dass es in der Heilbadewanne nicht zu Ausscheidungen der Kangalfische kommt, ist das Risiko einer Übertragung von Keimen auf den Patienten vermindert.

Kangalfische sind überlebensfähig, wenn die Wassertemperatur zwischen 20°C und 40°C liegt. Am oberen Ende dieser Spanne zeigen die Kangalfische eine besonders rege Aktivität. Liegt also die Wassertemperatur in der Heilbadewanne zwischen 36°C und 40°C, so führt dies dazu, dass die Kangalfische besonders intensiv an den Hautschuppen knabbern. Aus dem Badewasser in der Heilbadewanne wird ständig Wärme an die Umgebung abgegeben. Um die Wassertemperatur dennoch konstant in dem Bereich zu halten, in dem die Kangalfische ihre größte Aktivität entfalten, kann eine Heizeinrichtung vorgesehen sein, die die Wassertemperatur in der Heilbadewanne konstant hält.

In der Reinigungsstation schwimmen die Kangalfische entgegen dem Wasserstrom und werden durch das vorbeiströmende Wasser gereinigt. Unter Reinigen wird hier zum einen verstanden, dass Ausscheidungen, die die Kangalfische in der Reinigungsstation abgeben, vom Wasserstrom mitgeführt werden und aus der Reinigungsstation abtransportiert werden. Ferner werden Verunreinigungen, die leicht lösbar auf der Oberfläche der Kangalfische anhaften, durch den Wasserstrom abgespült werden. Es hat sich gezeigt, dass eine gute Reinigungswirkung erzielt wird, wenn der Wasserstrom in der Reinigungsstation eine Fließgeschwindigkeit von mindestens 0,5 m/s, vorzugsweise von mindestens 1,5 m/s, weiter vorzugsweise von mindestens 3 m/s hat. Die erfindungsgemäße Anordnung umfasst eine Einrichtung, mit der die Menge des der Reinigungsstation zugeführten Wassers entsprechend eingestellt werden kann. Aus der Reinigungsstation heraus wird das verunreinigte Wasser in die Kanalisation abgeführt.

Wird das Wasser zu der Reinigungsstation mit hoher Geschwindigkeit durch einen dünnen Zufluss zugeführt, so bilden sich Verwirbelungen in dem Wasserstrom. Durch die Verwirbelungen können die Fische zu größerer Schwimmaktivität veranlasst werden, es besteht aber die Gefahr, dass die Reinigungswirkung davon abhängt, an welcher Stelle der Reinigungsstation sich ein Fisch aufhält. Ein gleichförmigerer Wasserstrom kann erreicht werden, wenn der Wasserstrom am Eingang der Reinigungsstation so verteilt wird, dass ein über den Querschnitt der Reinigungsstation konstanter Wasserstrom in Richtung des Abflusses entsteht. Dazu kann ein Verteilelement vorgesehen sein, auf das der Wasserstrom nach seinem Eintritt in die Reinigungsstation trifft. Beispielsweise kann das Verteilelement eine Platte mit einer Mehrzahl von Öffnungen sein, die über den Querschnitt der Reinigungsstation verteilt sind.

Um die Kangalfische aus der Reinigungsstation in die Heilbadewanne zu befördern, kann bei einem nicht von den Ansprüchen abgedeckten Beispiel als Transporteinrichtung ein in die Reinigungsstation einsetzbarer Korb vorgesehen sein. Der Korb kann so ausgebildet sein, dass er das Becken der Reinigungsstation ausfüllt. Wenn der Korb in die Reinigungsstation eingesetzt ist, schwimmen die Kangalfische in dem durch den Korb vorgegebenen Bereich. Wird der Korb aus der Reinigungsstation herausgehoben, so fließt das Wasser aus dem Korb heraus und die Kangalfische werden trocken transportiert, bis sie in das Wasser der Heilbadewanne eingesetzt werden. Damit das Wasser aus dem Korb ausfließen kann, müssen geeignete Öffnungen vorgesehen sein. Die Öffnungen können im Boden des Korbs angeordnet sein, bevorzugt sind aber Öffnungen in den Seitenwänden des Korbs. Durch Öffnungen in den Seitenwänden des Korbs kann nämlich erreicht werden, dass der in der Reinigungsstation herrschende Wasserstrom sich durch den Korb hindurch fortsetzt und dort auf die Kangalfische wirkt. Ist die Seitenwand mit den Öffnungen vor dem Zufluss angeordnet, so wirkt sie als Verteilelement.

Bei der Behandlung eines Patienten in der Heilbadewanne werden mindestens 30 Kangalfische eingesetzt, wobei die Kangalfische im Durchschnitt wenigstens 8 cm lang sind. Die Reinigungsstation und die Transporteinrichtungen sind so bemessen, dass sie diese Anzahl von Fischen aufnehmen können.

Die Transporteinrichtung zum Transportieren der Kangalfische von der Reinigungsstation in die Heilbadewanne ist erfindungsgemäß ein Verbindungskanal zwischen der Reinigungsstation und der Heilbadewanne. Der Verbindungskanal kann verschließbar sein. Der Verbindungskanal ist während des Reinigens der Kangalfische und während der Behandlung des Patienten geschlossen und wird nur geöffnet, um die Kangalfische aus der Reinigungsstation in die Heilbadewanne zu lassen.

Nachdem die Behandlung des Patienten abgeschlossen ist, müssen die Kangalfische aus der Heilbadewanne zurück in die Reinigungsstation befördert werden. Dazu kann zunächst das Wasser so weit aus der Heilbadewanne abgelassen werden, dass die Kangalfische sich am Boden der Heilbadewanne sammeln. In einer vorteilhaften Ausführungsform ist als Transporteinrichtung im Boden der Heilbadewanne ein Korb versenkt, in dem sich die Kangalfische von alleine sammeln, wenn der Wasserstand in der Heilbadewanne zu niedrig wird. Es kann ein Deckel vorgesehen sein, der den Korb abdeckt, wenn ein Patient in der Heilbadewanne ist. Der Deckel schließt vorzugsweise bündig dem Boden der Heilbadewanne ab, fügt sich also so in die Heilbadewanne ein, dass er vom in der Heilbadewanne sitzenden Patienten nicht als lästig empfunden wird. Der Ausfluss der Heilbadewanne kann mit dem versenkten Korb kombiniert sein, so dass beim Ausfließen des Wassers eine Strömung in Richtung des Korbs entsteht, die die Kangalfische in diese Richtung lenkt. Haben sich alle Kangalfische in dem Korb gesammelt, wird der Korb herausgehoben und die Fische werden wieder in die Reinigungsstation überführt. Bei einem nicht von den Ansprüchen abgedeckten Beispiel dient ein einzelner Korb als erste und als zweite Transporteinrichtung.

Insbesondere ist es mit einer solchen Heilbadewanne mit einem derartigen versenkten Korb möglich, die Kangalfische mehrfach zwischen der Heilbadewanne und der Reinigungsstation hin- und herzutransportieren, ohne gegen gesetzliche Vorgaben bezüglich des Tierschutzes zu verstoßen. Gesetzlich vorgeschrieben ist es nämlich, dass Fische höchstens zwei Mal pro Tag mit einem Kescher aus einem Becken herausgefischt werden dürfen. Wäre man also auf einen Kescher angewiesen, um die Kangalfische aus der Heilbadewanne herauszuholen, so könnte man höchstens zwei Patienten pro Tag behandeln.

Um den Transport der Kangalfische zwischen der Reinigungsstation und der Heilbadewanne und umgekehrt zu erleichtern, können die Reinigungsstation und die Heilbadewanne unmittelbar zueinander benachbart angeordnet sein. Vorzugsweise sind die Seitenwand und die Reinigungsstation mit einer gemeinsamen Seitenwand verkleidet. Dies ermöglicht ein gemeinsames System für die Zuführung des Wassers zu der Heilbadewanne und zu der Reinigungsstation. Die Wasserzufuhr zu der Reinigungsstation kann derart gestaltet sein, dass von der Wasserzufuhr zu der Heilbadewanne, in der das Wasser die gewünschte Badetemperatur hat, eine Leitung abgezweigt wird und dass das Wasser entsprechend der in der Reinigungsstation gewünschten Temperatur gekühlt wird.

Um den Patienten vor Infektionen zu schützen, müssen nicht nur die Kangalfische, sondern auch die Heilbadewanne nach der Behandlung eines Patienten von Keimen befreit werden. Vorzugsweise umfasst die Heilbadewanne dazu eine Selbstreinigungsanlage. Mit der Selbstreinigungsanlage kann die Heilbadewanne beispielsweise mit heißem Wasser, heißem Dampf oder Desinfektionsmitteln behandelt werden.

Damit die Kangalfische ihre Ausscheidungen abgeben und Keime abgespült werden, reicht in der Regel eine Aufenthaltsdauer von weniger als einer Viertelstunde in der Reinigungsstation aus. Diese Zeit reicht auch ohne weiteres aus, um die Heilbadewanne zu reinigen und von Keimen zu befreien. Es kann also eine Mehrzahl von Patienten in kurzer Abfolge behandelt werden, wobei die Kangalfische für jede Behandlung einmal zwischen der Reinigungsstation und der Heilbadewanne hin- und her transportiert werden.

Es ist jedoch weder die Reinigungsstation noch die Heilbadewanne für einen dauerhaften Aufenthalt der Fische geeignet. Vorzugsweise umfasst die Anordnung deswegen zusätzlich ein Übernachtungsbecken, das für einen längerfristigen Aufenthalt der Kangalfische bestimmt ist. Das Übernachtungsbecken umfasst also Einrichtungen wie eine Überwachung der Wassertemperatur, eine Steuerung des Sauerstoffhaushalts, eine Möglichkeit zu füttern und Ähnliches. Es hat sich gezeigt, dass die Kangalfische besser gedeihen, wenn sie im Übernachtungsbecken viel Licht ausgesetzt sind. Vorteilhaft ist es deswegen, wenn das Übernachtungsbecken durchsichtige Wände hat, durch die von außen Licht hinein scheinen kann. Ein bevorzugtes Material für die Wände des Übernachtungsbeckens ist Kunststoff, weil dieses anders als Glas nicht splittert.

Um die Kangalfische aus dem Übernachtungsbecken wieder herauszuholen, kann ein Transportbehälter vorgesehen sein. Wenn der Transportbehälter die gesamte Nacht über in dem Übernachtungsbecken war, haben sich an ihm so viele Keime festgesetzt, dass er nicht mit der Reinigungsstation oder der Heilbadewanne in Berührung kommen sollte. Vorzugsweise werden die Kangalfische deswegen in einen anderen Behälter umgefüllt, bevor sie in die Reinigungsstation gesetzt werden. Dieser Behälter kann beispielsweise bereits der Korb sein, mit dem die Kangalfische später von der Reinigungsstation in die Heilbadewanne gesetzt werden.

Der Transportbehälter sollte Öffnungen in seinem Boden haben, damit das Wasser heraus fließen kann, wenn der Transportbehälter aus dem Übernachtungsbecken herausgehoben wird. Die Wände des Transportbehälters hingegen sollten möglichst ohne Öffnungen sein, damit die Kangalfische keine Kanten finden, an denen sie sich reiben können. Ein geeignetes Material für den Transportbehälter ist Edelstahl, weil sich daran weniger Keime festsetzen als an Kunststoff. Glas kommt ebenfalls in Betracht, hat aber den Nachteil, dass es zu Scherben kommen kann.

Wenn der Transportbehälter aus Edelstahl ist, ist er nicht durchsichtig, er vermindert also das Licht, das von außen in das Übernachtungsbecken einfallen kann. Um diesen Nachteil so gering wie möglich zu halten, hat der Transportbehälter vorzugsweise eine Höhe, die kleiner ist als 70%, vorzugsweise 50%, weiter vorzugsweise 40% der Höhe der Seitenwand des Übernachtungsbeckens.

Wenn der Transportbehälter aus dem Übernachtungsbecken herausgehoben wird, sollen sich möglichst alle Kangalfische in dem Transportbehälter befinden. Um sicherzustellen, dass die Kangalfische sich nicht zwischen dem Rand des Transportbehälters und der Seitenwand des Übernachtungsbeckens hindurch zwängen können, ist der Transportbehälter vorzugsweise derart bemessen, dass der Abstand zwischen dem Rand des Transportbehälters und der Wand des Übernachtungsbeckens kleiner ist als der Durchmesser eines Kangalfischs.

Die Erfindung wird nachfolgend unter Bezugnahme auf die beigefügten Zeichnungen anhand vorteilhafter Ausführungsformen beispielhaft beschrieben. Es zeigen:
- Fig. 1 :: eine schematische Darstellung einer Anordnung, die das Verständnis der Erfindung erleichtert;
- Fig. 2:: einen Querschnitt durch die Heilbadewanne und die Reinigungsstation aus Fig. 1;
- Fig. 3:: die Ansicht gemäß Fig. 2 bei einer Aus- führungsform der Erfindung; und
- Fig. 4:: einen Querschnitt durch das Übernachtungsbecken aus Fig. 1.

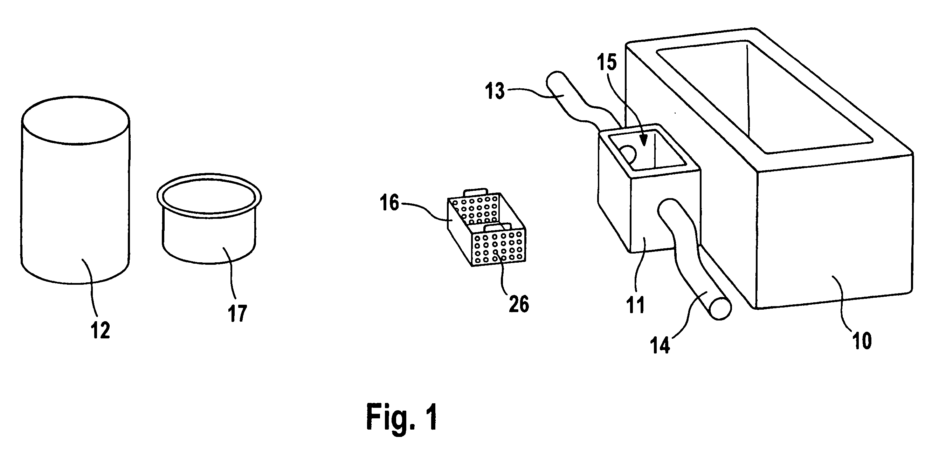

Eine Anordnung in Fig. 1 umfasst eine Heilbadewanne 10, eine Reinigungsstation 11 und ein Übernachtungsbecken 12. In die Heilbadewanne 10 kann aus einem nicht dargestellten Wasserhahn Badewasser mit einer Temperatur zwischen 36°C und 40°C eingelassen werden. Die Heilbadewanne 10 hat ein Volumen von mehr als 100 1. Ein Patient kann in die Heilbadewanne 10 einsteigen und wie in einer üblichen Badewanne ein Bad nehmen.

Die neben der Heilbadewanne 10 angeordnete Reinigungsstation 11 ist mit einem Wasserzufluss 13 und einem Wasserabfluss 14 versehen. Mit dem Wasserzufluss 13 und dem Wasserabfluss 14 kann eine fortlaufende Strömung in einem Becken 15 der Reinigungsstation 11 erzeugt werden. Das der Reinigungsstation 11 zugeführte Wasser hat eine Temperatur von 30°C.

Die Anordnung umfasst ferner einen ersten Korb 16, der so bemessen ist, dass er in das Becken 15 der Reinigungsstation 11 passt. Der erste Korb 16 ist an zwei seiner gegenüberliegenden Seitenwände mit einer Mehrzahl von Öffnungen 26 versehen. Die einzelnen Öffnungen 16 haben einen Durchmesser von weniger als 1 cm, so dass die Kangalfische nicht durch die Öffnungen 16 entweichen können. In der Summe ist der Querschnitt der Öffnungen 16 jedoch so groß, dass sich die in dem Becken 15 herrschende Strömung durch den Korb 16 hindurch fortsetzen kann, wenn der Korb 16 in das Becken 15 eingesetzt ist.

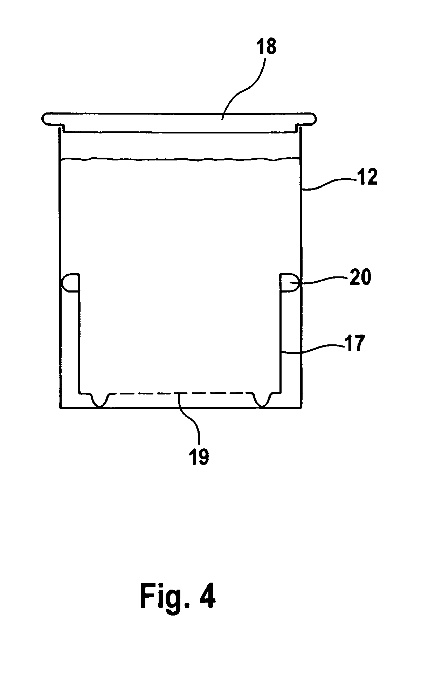

Zu dem Übernachtungsbecken 12 gehört ein Transportbehälter 17. In der Schnittdarstellung der Fig. 4 ist der Transportbehälter 17 in das Übernachtungsbecken 12 eingesetzt. Das Übernachtungsbecken 12 ist bis kurz unter einen Deckel 18 mit Wasser gefüllt. Das Wasser wird mit nicht dargestellten Mitteln bei einer konstanten Temperatur gehalten. Der Wasseraustausch und der Sauerstoffhaushalt sind ebenfalls geregelt. In dem Übernachtungsbecken 12, wie es in Fig. 4 gezeigt ist, verbringen die Kangalfische die Nacht. Der Deckel 18 verhindert, dass die Kangalfische hinaus springen können.

Sollen die Kangalfische am nächsten Tag zur Behandlung von Patienten eingesetzt werden, wird der Transportbehälter 17 aus dem Übernachtungsbecken 12 herausgehoben. Durch Öffnungen 19 am Boden des Transportbehälters 17 fließt das Wasser beim Herausheben des Transportbehälters 17 nach unten ab. Da der Rand 20 des Transportbehälters 17 mit der Seitenwand des Übernachtungsbeckens 12 abschließt, werden mit dem Transportbehälter 17 alle Kangalfische aus dem Übernachtungsbecken 12 herausgehoben.

Am Transportbehälter 17 haften die Keime, die sich über Nacht in dem Übernachtungsbecken 12 gesammelt haben. Die Kangalfische werden deswegen aus dem Transportbehälter 17 in den zuvor gereinigten Korb 16 umgefüllt. Der Korb 16 wird nun mit den Kangalfischen in die Reinigungsstation 11 eingesetzt. Durch die Strömung in der Reinigungsstation 11 werden Keime, die sich im Übernachtungsbecken 12 auf der Oberfläche der Kangalfische abgesetzt haben können, abgespült. Da die Kangalfische während der Nacht nicht mit Futter versorgt worden sind, kommt es bei der Reinigung nur in geringem Umfang zu Ausscheidungen der Kangalfische.

Während die Kangalfische in der Reinigungsstation 11 gereinigt werden, kann Badewasser in die Heilbadewanne 10 eingelassen werden, und der Patient kann sich in die Heilbadewanne 10 setzen. Ist der Reinigungsvorgang abgeschlossen, wird der Korb 16 aus der Reinigungsstation 11 herausgehoben und in die Heilbadewanne 10 gesetzt. Die Kangalfische verteilen sich nun im Wasser der Heilbadewanne 10 und beginnen, an den Hautschuppen des Patienten zu knabbern. Wegen der höheren Temperatur des Wassers in der Heilbadewanne 10 werden die Kangalfische zu einem besonders intensiven Knabbern angeregt. Hingegen wird der Stoffwechsel verlangsamt, so dass während der Behandlung nicht mit Ausscheidungen der Kangalfische zu rechnen ist. Wenn die Behandlung abgeschlossen ist, steigt der Patient aus der Heilbadewanne 10 hinaus, während die Kangalfische dort verbleiben.

Wie Fig. 4 zeigt ist am Boden der Heilbadewanne 10 eine mit einem Deckel 22 abgedeckte Vertiefung ausgebildet, die einen Abfluss 21 umfasst. Der Deckel 22, der Öffnungen aufweist, so dass Wasser hindurch fließen kann, schließt bündig mit dem Boden der Heilbadewanne 10 ab. Der Patient kann also ohne Beeinträchtigung in der Heilbadewanne 10 sitzen. In der Vertiefung ist zwischen dem Abfluss 21 und dem Deckel 22 ein zweiter Korb 23 angeordnet. Wird nun der Abfluss 21 geöffnet und fließt das Wasser aus der Heilbadewanne 10 durch den Deckel 22 und den Abfluss 21 hindurch ab, so werden die Kangalfische in den zweiten Korb 23 gespült. Wenn die Kangalfische mit dem Korb 23 aus der Heilbadewanne 10 herausgehoben worden sind, kann die Heilbadewanne mit einer nicht dargestellten Selbstreinigungsanlage gereinigt werden.

Werden die Kangalfische nun mit dem Korb 23 in die Reinigungsstation 11 eingesetzt, so sind sie dort einer kühleren Umgebung ausgesetzt. Durch die kühlere Temperatur wird der Stoffwechsel der Kangalfische angeregt und es kommt zu vermehrten Ausscheidungen. Durch die Strömung in der Reinigungsstation 11 werden die Ausscheidungen abtransportiert, und die Oberfläche der Kangalfische wird abgespült. Während des Reinigens ist die Reinigungsstation 11 mit einem Deckel 24 abgedeckt, so dass die Kangalfische nicht hinaus springen können. Ist der Reinigungsvorgang beendet, sind die Kangalfische bereit für die Behandlung eines nächsten Patienten.

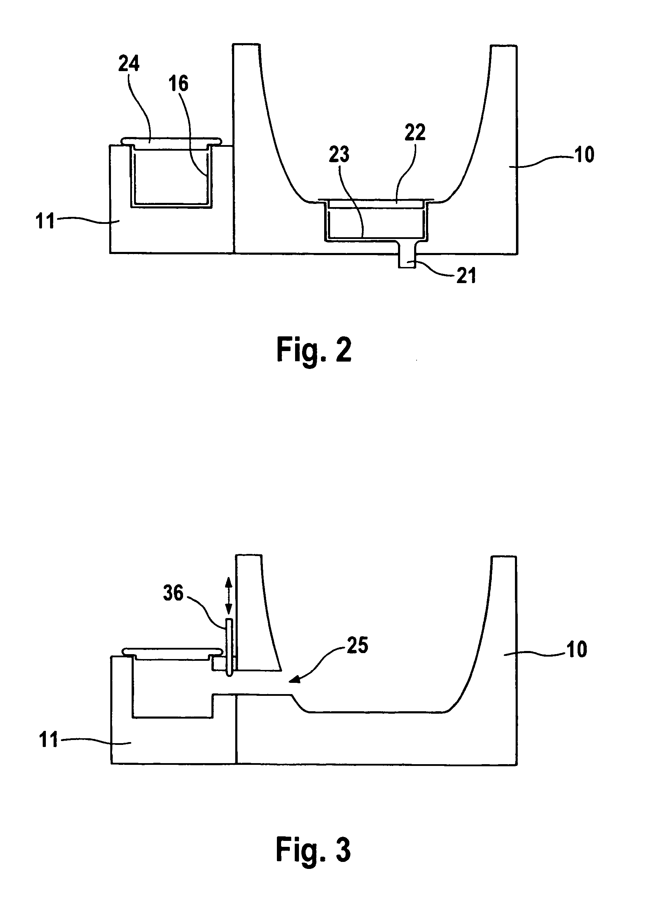

In der in Fig. 3 gezeigten Ausführungsform ist ein Verbindungskanal 25 zwischen dem Becken der Reinigungsstation 11 und der Heilbadewanne 10 vorgesehen. Der Verbindungskanal 25 kann mit einer Sperre 36 geschlossen werden. Ist nun die Heilbadewanne 10 für die Behandlung eines Patienten vorbereitet und ist der Reinigungsvorgang in der Reinigungsstation 11 abgeschlossen, so kann die Sperre 36 geöffnet werden, um die Kangalfische aus der Reinigungsstation 11 in die Heilbadewanne 10 einzulassen. Sind alle Kangalfische in der Heilbadewanne 10, wird die Sperre 36 wieder geschlossen. Für den Patienten kam es angenehmer sein, wenn die Kangalfische durch einen Verbindungskanal 25 in die Heilbadewanne 10 eingelassen werden, als wenn die Kangalfische vor seinen Augen aus einem Korb heraus in das Badewasser eingesetzt werden.

## Patentansprüche

1. Anordnung zum Behandeln von Hautkrankheiten mittels Kangalfischen, umfassend eine Heilbadewanne (10), eine Reinigungsstation (11), eine Transporteinrichtung (16, 25) zum Befördern von Kangalfischen aus der Reinigungsstation (11) in die Heilbadewanne (10) und eine Transporteinrichtung (23) zum Befördern von Kangalfischen aus der Heilbadewanne (10) in die Reinigungsstation (11), **dadurch gekennzeichnet, dass** die Transporteinrichtung zum Befördern von Kangalfischen aus der Reinigungsstation (11) in die Heilbadewanne (10) ein Verbindungskanal (25) zwischen der Reinigungsstation (11) und der Heilbadewanne (10) ist und dass ein Mittel zum Erzeugen eines Wasserstroms mit einer Temperatur zwischen 20°C und 35°C durch die Reinigungsstation vorgesehen ist, wobei der Wasserstrom das gesamte Wasser in der Reinigungsstation (11) für einen Zeitraum durchgehend in Bewegung hält.

2. Anordnung nach Anspruch 1, **dadurch gekennzeichnet, dass** der Wasserstrom eine Temperatur zwischen 25°C und 32°C hat.

3. Anordnung nach Anspruch 2, **dadurch gekennzeichnet, dass** der in der Reinigungsstation erzeugte Wasserstrom eine Fließgeschwindigkeit von mindestens 0,5 m/s, vorzugsweise von mindestens 1,5 m/s, weiter vorzugsweise von mindestens 3 m/s hat.

4. Anordnung nach einem der Ansprüche 1 bis 3, **dadurch gekennzeichnet, dass** die Reinigungsstation ein Verteilelement umfasst, das einen über einen Zufluss mit kleinerem Querschnitt zugeführten Wasserstrom auf einen größeren Querschnitt verteilt.

5. Anordnung nach einem der Ansprüche 1 bis 4, **dadurch gekennzeichnet, dass** ein Thermostat vorgesehen ist, um die Temperatur des Wassers in der Heilbadewanne konstant zu halten.

6. Anordnung nach einem der Ansprüche 1 bis 5, **dadurch gekennzeichnet, dass** die Transporteinrichtung zum Befördern von Kangalfischen aus der Reinigungsstation in die Heilbadewanne ein Korb (16) ist, der eine Vielzahl von Öffnungen in der Seitenwand aufweist.

7. Anordnung nach einem der Ansprüche 1 bis 6, **dadurch gekennzeichnet, dass** die Transporteinrichtung zum Befördern von Kangalfischen aus der Heilbadewanne (10) in die Reinigungsstation (11) ein Korb (23) ist und dass der Korb (23) im Boden der Heilbadewanne (10) versenkt werden kann.

8. Anordnung nach Anspruch 7, **dadurch gekennzeichnet, dass** ein Deckel (22) vorgesehen ist, mit dem der im Boden der Heilbadewanne (10) versenkte Korb (23) so abgedeckt werden kann, dass der Deckel (22) bündig mit dem Boden der Heilbadewanne (10) abschließt.

9. Anordnung nach einem der Ansprüche 1 bis 8, **dadurch gekennzeichnet, dass** die Heilbadewanne (10) mit einer Selbstreinigungsanlage ausgestattet ist.

10. Anordnung nach einem der Ansprüche 1 bis 9, **dadurch gekennzeichnet, dass** ferner ein Übernachtungsbecken (12) für die Kangalfische vorgesehen ist.

11. Anordnung nach Anspruch 10, **dadurch gekennzeichnet, dass** sie einen Transportbehälter (17) umfasst, mit dem die Kangalfische aus dem Übernachtungsbecken (12) herausgehoben werden können, und dass der Transportbehälter (17) in das Übernachtungsbecken (12) hineinpasst und derart bemessen ist, dass der Abstand zwischen dem Rand des Transportbehälters (17) und der Wand des Übernachtungsbeckens (12) kleiner ist als der Durchmesser eines Kangalfischs.

12. Anordnung nach Anspruch 11, **dadurch gekennzeichnet, dass** die Höhe der Seitenwand des Transportbehälters (17) kleiner ist als 70%, vorzugsweise 50%, weiter vorzugsweise 40% der Höhe der Seitenwand des Übernachtungsbeckens (12).

13. Anordnung nach Anspruch 11 oder 12, **dadurch gekennzeichnet, dass** der Boden des Transportbehälters (17) eine Vielzahl von Öffnungen (19) aufweist und dass die Seitenwände des Transportbehälters (17) geschlossen sind.

## Claims

1. Assembly for treating skin diseases with doctor fish, comprising a healing tank (10), a cleaning station (11), a transport device (16, 25) for conveying doctor fish from the cleaning station (11) into the healing tank (10), and a transport device (23) for conveying doctor fish from the healing tank (10) into the cleaning station (11), **characterized in that** the transport device for conveying doctor fish from the cleaning station (11) into the healing tank (10) is a connecting channel (25) between the cleaning station (11) and the healing tank (10), and **in that** a means is provided for generating a water stream with a temperature of between 20°C and 35°C through the cleaning station, which water stream keeps all the water in the cleaning station (11) continuously in motion for a period of time.

2. Assembly according to Claim 1, **characterized in that** the water stream has a temperature of between 25°C and 32°C.

3. Assembly according to Claim 2, **characterized in that** the water stream generated in the cleaning station has a flow speed of at least 0.5 m/s, preferably of at least 1.5 m/s, more preferably of at least 3 m/s.

4. Assembly according to one of Claims 1 to 3, **characterized in that** the cleaning station comprises a distributor element, with which a water stream delivered via an inflow of smaller cross section is distributed across a larger cross section.

5. Assembly according to one of Claims 1 to 4, **characterized in that** a thermostat is provided for keeping the temperature of the water in the healing tank constant.

6. Assembly according to one of Claims 1 to 5, **characterized in that** the transport device for conveying doctor fish from the cleaning station into the healing tank is a basket (16), which has a multiplicity of openings in the side wall.

7. Assembly according to one of Claims 1 to 6, **characterized in that** the transport device for conveying doctor fish from the healing tank (10) into the cleaning station (11) is a basket (23), and **in that** the basket (23) can be recessed in the bottom of the healing tank (10).

8. Assembly according to Claim 7, **characterized in that** a cover (22) is provided, with which the basket (23) recessed in the bottom of the healing tank (10) can be covered such that the cover (22) is flush with the bottom of the healing tank (10).

9. Assembly according to one of Claims 1 to 8, **characterized in that** the healing tank (10) is equipped with a self-cleaning system.

10. Assembly according to one of Claims 1 to 9, **characterized in that** an overnight basin (12) for the doctor fish is also provided.

11. Assembly according to Claim 10, **characterized in that** it comprises a transport container (17) with which the doctor fish can be lifted out of the overnight basin (12), and **in that** the transport container (17) fits into the overnight basin (12) and is dimensioned in such a way that the distance between the edge of the transport container (17) and the wall of the overnight basin (12) is less than the diameter of a doctor fish.

12. Assembly according to Claim 11, **characterized in that** the height of the side wall of the transport container (17) is less than 70%, preferably 50%, more preferably 40% of the height of the side wall of the overnight basin (12).

13. Assembly according to Claim 11 or 12, **characterized in that** the bottom of the transport container (17) has a multiplicity of openings (19), and **in that** the side walls of the transport container (17) are closed.

## Revendications

1. Dispositif de traitement des maladies de peau à l'aide de poissons Garra Rufa, comportant une baignoire de traitement (10), une station de nettoyage (11), un dispositif de transport (16, 25) pour le transport des poissons Garra Rufa de la station de nettoyage (11) à la baignoire de traitement (10) et un dispositif de transport (23) pour le transport des poissons Garra Rufa de la baignoire de traitement (10) à la station de nettoyage (11), **caractérisé en ce que** le dispositif de transport pour le transport de poissons Garra Rufa de la station de nettoyage (11) à la baignoire de traitement (10) est un canal de raccordement (25) entre la station de nettoyage (11) et la baignoire de traitement (10) et **en ce qu'**on a prévu un moyen de production d'un courant d'eau, avec une température comprise entre 20°C et 35°C, à travers la station de nettoyage, le courant d'eau maintenant l'ensemble de l'eau contenue dans la station de nettoyage (11) en mouvement perpétuel pendant un laps de temps précis.

2. Dispositif selon la revendication 1, **caractérisé en ce que** le courant d'eau présente une température comprise entre 25°C et 32°C.

3. Dispositif selon la revendication 2, **caractérisé en ce que** le courant d'eau produit dans la station de nettoyage présente une vitesse d'écoulement d'au moins 0,5 m/s, de préférence d'au moins 1,5 m/s, de manière encore plus préférée d'au moins 3 m/ s.

4. Dispositif selon l'une quelconque des revendications 1 à 3, **caractérisé en ce que** la station de nettoyage comprend un élément de distribution qui répartit un courant d'eau, amené par le biais d'une entrée avec une section transversale inférieure, sur une section transversale supérieure.

5. Dispositif selon l'une quelconque des revendications 1 à 4, **caractérisé en ce qu'**on a prévu un thermostat pour maintenir constante la température de l'eau dans la baignoire de traitement.

6. Dispositif selon l'une quelconque des revendications 1 à 5, **caractérisé en ce que** le dispositif de transport pour le transport des poissons Garra Rufa de la station de nettoyage à la baignoire de traitement est un panier (16) qui présente une multitude d'orifices dans la paroi latérale.

7. Dispositif selon l'une quelconque des revendications 1 à 6, **caractérisé en ce que** le dispositif de transport pour le transport des poissons Garra Rufa de la baignoire de traitement (10) à la station de nettoyage (11) est un panier (23) et **en ce que** le panier (23) peut être abaissé dans le fond de la baignoire de traitement (10).

8. Dispositif selon la revendication 7, **caractérisé en ce qu'**on a prévu un couvercle (22) au moyen duquel le panier (23), abaissé dans le fond de la baignoire de traitement (10), peut être fermé de telle sorte que le couvercle (22) affleure avec le fond de la baignoire de traitement (10).

9. Dispositif selon l'une quelconque des revendications 1 à 8, **caractérisé en ce que** la baignoire de traitement (10) est équipée d'une installation d'auto-nettoyage.

10. Dispositif selon l'une quelconque des revendications 1 à 9, **caractérisé en ce qu'**on a prévu en outre un bassin de repos nocturne (12) pour les poissons Garra Rufa.

11. Dispositif selon la revendication 10, **caractérisé en ce qu'**il comprend un récipient de transport (17) au moyen duquel les poissons Garra Rufa peuvent être enlevés du bassin de repos nocturne (12) et **en ce que** le récipient de transport (17) rentre dans le bassin de repos nocturne (12) et est dimensionné de telle sorte que la distance entre le bord du récipient de transport (17) et la paroi du bassin de repos nocturne (12) est inférieure au diamètre d'un poisson Garra Rufa.

12. Dispositif selon la revendication 11, **caractérisé en ce que** la hauteur de la paroi latérale du récipient de transport (17) est inférieure à 70%, de préférence à 50%, de manière encore préférée à 40 % de la hauteur de la paroi latérale du bassin de repos nocturne (12).

13. Dispositif selon la revendication 11 ou 12, **caractérisé en ce que** le fond du récipient de transport (17) comporte une multitude d'orifices (19) et **en ce que** les parois latérales du récipient de transport (17) sont fermées.
